# EUROPEAN PATENT SPECIFICATION

(11) **EP 0 386 353 B1**
(45) Date of publication and mention of the grant of the patent: **27.09.1995**
(21) Application number: 89302359.8
(22) Date of filing: 09.03.1989
(51) Int. Cl.: G01N 27/12

(54) **Smell sensing element and smell sensing device**
Geruchaufspürendes Element und Vorrichtung dazu
Elément sensible aux odeurs et dispositif sensible aux odeurs

(43) Date of publication of application: 12.09.1990
(73) Proprietor: NEW COSMOS ELECTRIC CO., LTD., Osaka-shi Osaka-fu (JP); Ehara, Katsuo, Tokyo (JP)
(72) Inventor: Fukui,Kiyoshi, Osaka-shi,Osaka-fu (JP); Shigemori,Tesshi, Osaka-shi,Osaka-fu (JP); Ehara,Katsuo, Tokyo (JP)
(74) Representative: Rackham, Anthony Charles

(56) References cited:
- EP-A- 0 197 629
- EP-A- 0 205 777
- FR-A- 2 339 859
- US-A- 3 955 929
- EXTENDED ABSTRACTS/ELECTROCHEMICAL SOCIETY, vol. 87-2, 1987, pages 2255-2256, abstract no. 1666, Princeton, New Jersey, US; K. FUKUI et al.: "CO detection by BaO an Y203 dispersed SnO2 ceramics"

## Description

The present invention relates to a smell sensing element and a smell sensing device using the element.

It is known to evaluate smell or odor by human olfactories, by a gas chromatograph or by a gas sensor constituted by use of such a metal oxide semiconductor as SnO₂ (Japanese patent laid-open under No. 54-114296).

However, the first method using the human olfactories has the disadvantages of troublesome evaluation procedures and of difficult and expertise-requiring evaluation. The second method using gas chromatograph has the disadvantages of its great size and its unsuitability for portable use and its incapability of speedy real-time analysis. On the other hand, by the third method using a metal oxide semiconductor as the sensing element, the device may be miniaturized for portable use. However, the device needs some improvements in its sensitivity and precision and the same has been incapable of providing precise evaluation.

Extended Abstracts, Electrochemical Society, 87-2 (1987), Princeton, New Jersey, USA, Abstract No. 1666 discloses a device for detecting carbon monoxide (CO) which comprises a layer of BaO on an SnO₂ sintered semiconductor. In order to improve the sensitivity of the device which can be harmed by BaO-SnO₂ interactions, a middle barrier layer of Y₂O₃ is provided.

EP-A-0197629 discloses an alcohol selective gas sensor including a semiconductor detecting element comprising SnO₂ and at least 0.5 mol % of at least one oxide of Be, Mg, Ca, Sr or Ba carried by the SnO₂.

In accordance with the present invention there is provided a smell sensing element which comprises a semiconductor portion of SnO₂ and first and second components carried by said SnO₂ in a mixed state,
said first component being at least one oxide of an alkaline earth metal and being present in an amount of from 0.25 - 20 mol % based on said SnO₂, and
said second component being at least one oxide selected from Sc, Zr, Hf, Th, Al, Ga and metals of the lanthanide series, and being present in an amount of 0.25 - 20 mol % based on said SnO₂.

The present invention in preferred embodiments provides a smell sensing element which is capable of accurately and speedily measuring various types of smells, and which also can be portable and inexpensive to produce.

The functions and effects of this smell sensing element will be described next.

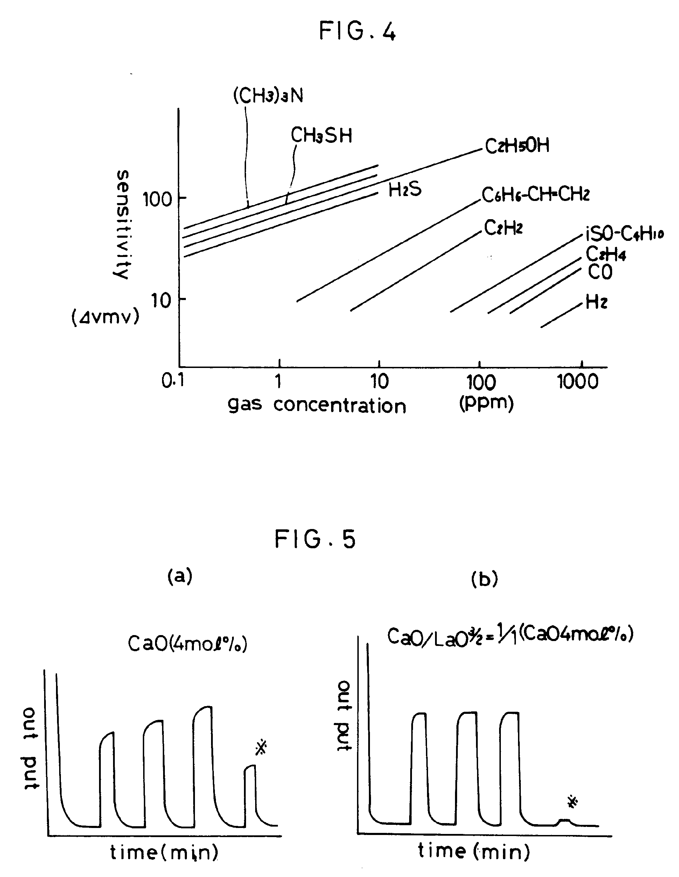

In general, smell is attributable to volatile vapors of such compounds as alcohols, acetylene, hydrogen sulfide, methyl mercaptan, trimethylamine, styrene, esters, aldehydes, ketones or of carboxylic acids, and others. With these volatile vapors, the smell intensity of gases (vapors) acting on the sensory membrane of olfactory cells tends to be enhanced when the degree of unsaturation of the hydrocarbons is larger, eg the smell intensity of triply unsaturated hydrocarbons is higher than that of doubly unsaturated ones, and the intensity also tends to increase with increase in the number of the doubly unsaturated bonds in the hydrocarbons. In the element of the present invention, the SnO₂ semiconductor portion carries the aforementioned mixture of first and second components. As illustrated by some examples tabulated in Tables 1, 2 and 3 and also shown in Fig. 4, the element of the present invention gives a higher selectivity to more-smelling gases than to less-smelling ones such as H₂, CO, C₄ H₁₀ or the like. Further, Fig. 5(a) and Fig. 5(b) show the initial response profiles for ethanol vapor (100 ppm) of this smell sensing element: The response of the element carrying CaO alone as the first component (Fig. 5(a)), was unstable during a certain initial period of operation. On the other hands, the element carrying both CaO as the first component and$\text{LaO} \frac{\text{3}}{\text{2}}$ as the second component (Fig. 5(b)), provided a stable sensitivity to the ethanol vapor (100 ppm) from the beginning. That is, the element carrying both of the first and second components was more able to sense smelling gases speedily and accurately.

Thus, by means of a smell sensing element of the present invention, an accurate evaluation may be made speedily without erroneous sensing of smell-less gases; and then it becomes possible to evaluate smell intensity easily in real time without requiring much experience. Consequently, the smell sensing element may readily serve for evaluation of freshness or ripeness of foods and also for olfactory medical diagnosis which has so far depended on the expertise and experience of a medical doctor.

Further, a smell sensing device can be constituted by the above-described smell sensing element and a readout means for displaying the output of the sensing element.

This smell sensing device is capable of measuring various types of smells in an accurate and speedy manner, and the device may be formed compact, portable and inexpensive.

The invention will now be further described with reference to the accompanying drawings, in which :
Fig. 1 is a schematic showing the construction of a smell sensing device, in accordance with one preferred embodiment of the invention ;
Fig. 2 is a circuit diagram of the smell sensing device of Fig. 1;
Fig. 3(a) shows a support mechanism for the smell sensing element;
Fig. 3(b) is a partially cutaway perspective view showing a sintered spherical-type smell sensing element;
Fig. 3(c) is a cross sectional view showing a substrate-type smell sensing element;
Fig. 4 graphically shows measurements of various types of gases obtained by the smell sensing element;
Fig. 5(a) is a graph showing measured initial response profiles of a smell sensing element carrying CaO alone, and therefore not in accordance with the invention, and
Fig. 5(b) is a graph showing the initial response profiles obtained for the smell sensing element of the invention carrying both CaO and$\text{LaO} \frac{\text{3}}{\text{2}}$ .

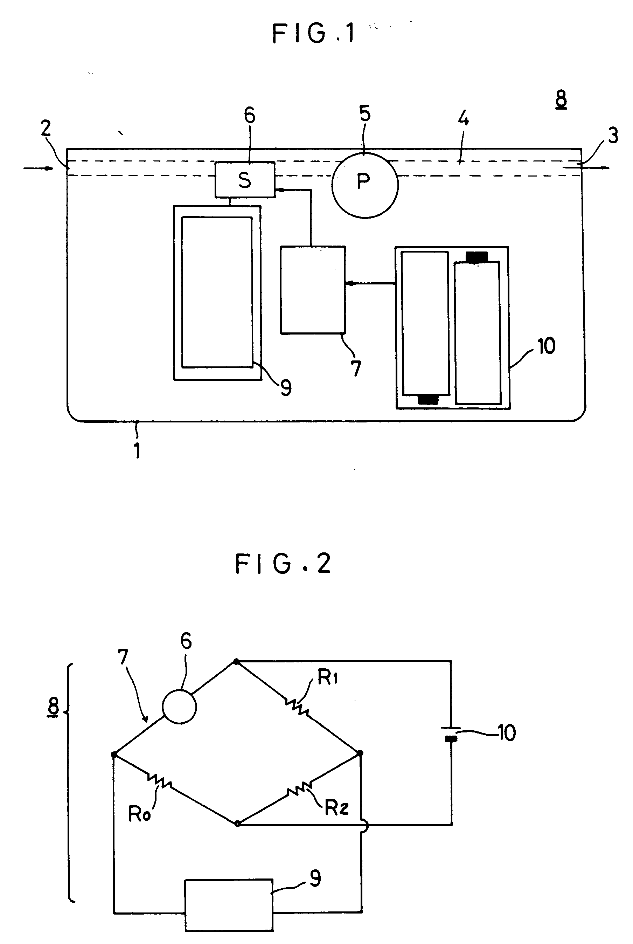

One preferred embodiment of a smell sensing device of the present invention is shown in Figs 1 and 2 of the accompanying drawings.

Fig. 1 is a schematic drawing showing the construction of the smell sensing device. Reference numeral 1 denotes a casing including an inlet opening 2, an outlet opening 3 and a passage 4 formed between the openings 2 and 3. Numeral 5 denotes a suction pump. Numeral 6 denotes a SnO₂-based smell sensing element disposed in the passage 4 so as to be exposed to a smell introduced through the inlet opening 2. Numeral 7 denotes a measuring circuit constructed as.e.g. a bridge circuit shown in Fig. 2, the measuring circuit 7 constituting a smell sensing unit 8 together with the sensing element 6. Numeral 9 denotes a readout means constituted by e.g. a voltmeter and operable to provide a digital or analog readout values representative of a smell intensity. Numeral 10 denotes a power source incorporating e.g. a rectifier circuit for obtaining an appropriate direct current voltage from a battery or from a commercial power source.

Further, reference marks R0, R1 and R2 denote resistances. The temperatures of the smell sensing element 6 are controlled through a bridge voltage from the power source 10.

Incidentally, the conductivity of the SnO₂ semiconductor may be controlled by doping the same with an appropriate amount of Sb⁵⁺, Nb⁵⁺ or the like.

It is also to be noted that the present invention may be applied also to batchwise smell sensing device without the suction pump 5 in place of the suction flow type smell sensing device shown in Fig. 1.

Further, the smell sensing unit 8 and the smell readout means 9 may be formed as separate units instead of placing the same close to each other. Also, it is conceivable to provide the smell readout means 9 with a peak-hold or other indicators such as a buzzer and a lamp.

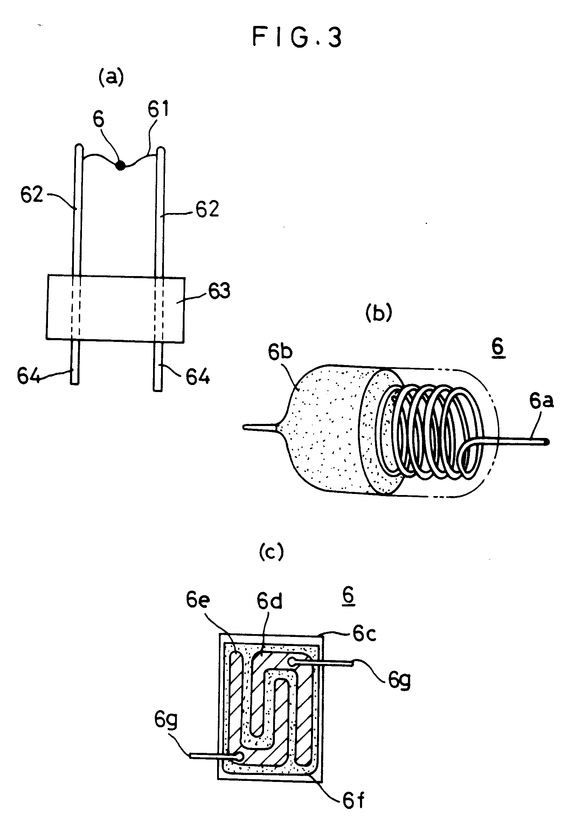

Fig. 3(a) shows one example of support mechanisms for the smell sensing element 6 used in the embodiment shown in Fig. 1. In this Fig. 3(a), the smell sensing element 6 is attached to a support pin 62 via a heater cable 61. Numeral 63 denotes a socket and numeral 64 denotes a power terminal.

Fig. 3(b) shows the smell sensing element 6 formed as a sintered bead type. This element is constituted by a platinum coil 6a coated with a sintered semiconductor 6b formed by adding to the sintered SnO₂ semiconductor 0.25 to 20 mol % of a first component of at least one oxide selected from the group consisting of oxides of alkaline earth metals and also 0.25 to 20 mol % of a second component of at least one oxide selected from the group consisting of oxides of Sc, Y, Ti, Zr, Hf, Th, Al, Ga and lanthanoids (the mixture ratio of the first component relative to the second component being limited below 90 %).

Fig. 3(c) shows the smell sensing element 6 comprising a substrate constituted by electrodes 6d and 6e formed thereon, a platinum cable 6g attached to each electrode (6d and 6e), and a sintered thick film of semiconductor portion 6f covered thereon. In Fig. 3(c), the interconnection of the electrodes 6d and 6e is not shown. The sintered thick film is composed of the SnO₂ semiconductor carrying a mixture of first and second components as just described for the embodiment of Fig. 3(b).

Such a smell sensing element 6, as tabulated in Tables 1, 2 and 3, has a high smell selectivity: the element has high sensitivities to smelling gases, while low sensitivities to smell-less gases, such as H₂ , CO, C₄ H₁₀ or the like. Further, as shown in Fig. 5(b), the sensing element 6 achieves quicker response and more stable sensitivity and further gives low sensitivity to H₂ (1000 ppm) denoted by an asterisk when it carries both of the first and second components rather than only the first component.

Especially, in the case of addition with CaO -$\text{LaO} \frac{\text{3}}{\text{2}}$ group, as tabulated in Table 2, the sensitivity to ethanol (100 ppm) reaches its maximum around equimolecular quantities of two components. At the same time, the sensitivity ratios of ethanol to H₂, CO, C₄ H₁₀ or the like reaches its maximum.

Fig. 4 shows logarithmically linear relationships between sensitivity ΔV (mV) and gas concentration C (ppm), that is, their various power relationships.

As already mentioned, the relative smell intensities among smelling gases tend to increase with increase in the degree of unsaturation (i.e. double, tiple bonds or the number) in hydrocarbons. Further, organic molecules with the atoms of O, H and S tend to have a smell. In view of these facts, the smell sensing element 6 of the present invention has the following characteristics:
1. Its sensitivities to hydrocarbons increases with increase in the degree of the unsaturation.
2. The element is more sensitive to the triply unsaturated hydrocarbons than to the doubly unsaturated ones.
3. The element has high sensitivities to hydrocarbons containing O, N, S or the like; and
4. The element is sensitive to smelling gases which have reducibility.

Manufacturing processes for such a smell sensing element 6 will be briefly described as follows:
(1) Powder of SnO₂ semiconductor was obtained by pyrolysis of the hydrolysis products provided from SnCl₄ -aqueous solution to which was added a small amount of SbCl₅ to obtain an appropriate conductivity. The powder of the Sb⁵⁺ -doped SnO₂ was applied onto a platinum coil 6a to form a bead of ca. 0.4 mm diameter. After drying, the bead was heated by allowing a given electric current flow through the platinum coil 6a and the SnO₂ powder was sintered for one hour at a given temperature, e.g. about 650 degrees Celsius. The bead of the SnO₂ semiconductor thus obtained had a porous structure favorable for obtaining a high sensitivity.
(2) The porous bead of SnO₂ semiconductor was then impregnated with an aqueous solution containing at least one nitrate of an alkaline earth element (Be, Mg, Ca, Sr, Ba) as precursor of the first component, and at least one nitrate of Sc, Zr, Hf, Th, Al, Ga and lanthanoides (La, Ce, Pr, Tb, Yb, etc.), as precursor of the second component. Then, the semiconductor is again dried in the same manner as the above process (1). The salts supported in the porous semiconductor were decomposed into their oxides in air at a temperature of ca. 600 degrees Celsius by Joule heat of the platinum coil 6a.

The smell sensing element 6 obtained through the above-described processes (1) and (2) was incorporated into a conventional bridge circuit.

A bridge voltage is set in such a manner that the smell sensing element obtains a temperature of approximately 400°C by Joule heat of the coil 6a of the element.

Instead of the above-described impregnation method, other conventional methods, such as the coprecipitation method or the electrophoresis method, may be employed.

The amount of the first and second components added to the element 6 should each range from 0.25 to 20 mol %, respectively, for proper operation. That is, if either of their contents is below the lower limit of 0.25 mol %, there occurs deterioration in the selectivity or the stability of the element. On the other hand, if either of their contents exceeds the defined upper limit of 20 mol %, there occurs disadvantageous reduction in the sensitivities to the various gases.

The functions of the smell sensing device shown in Fig. 1 are as follows:

First, the device sucks in air containing smelling gases to be sensed at a flow rate of ca. 500 ml/min. through the suction pump 5. The resistance of the element 6 decreases in proportion to the concentration of smelling gases in the presence of the introduced air, and corresponding sensor output of a bridge circuit 7 is displayed on a readout means 9.

Note: In the following Tables 1 through 3, the reference marks 'A' through 'J' respectively denote: 'A' for trimethylamine, 'B' for methyl sulfide, 'C' for hydrogen sulfide, 'D' for ethanol, 'E' for styrene, 'F' for acetylene, 'G' for isobutane, 'H' for ethylene, 'I' for hydrogen and 'J' for carbon monoxide.

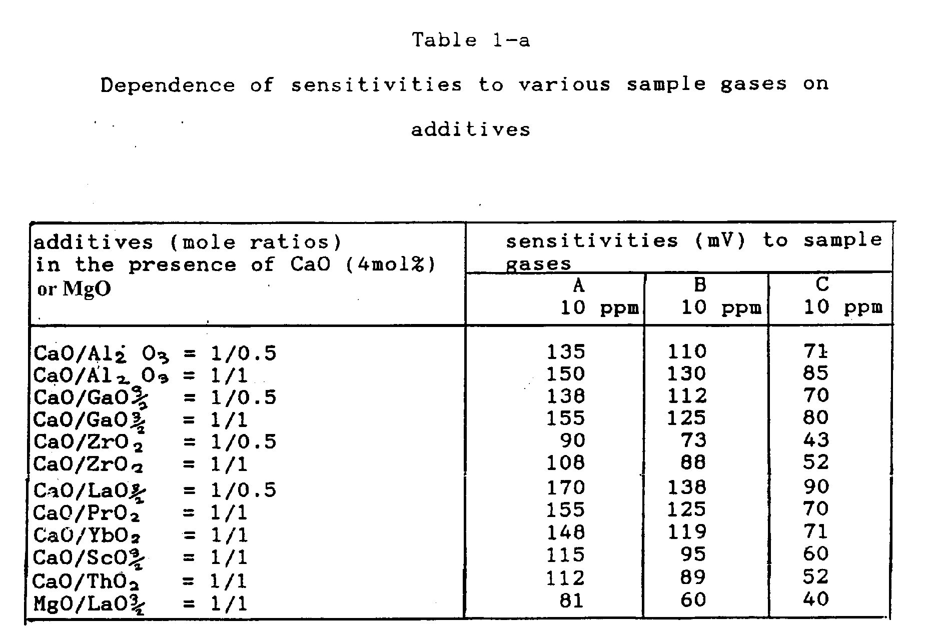

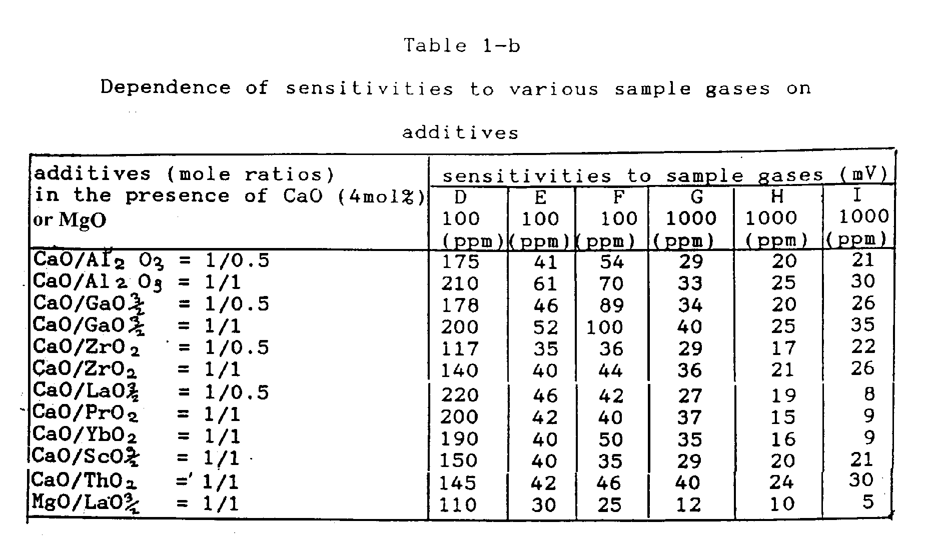

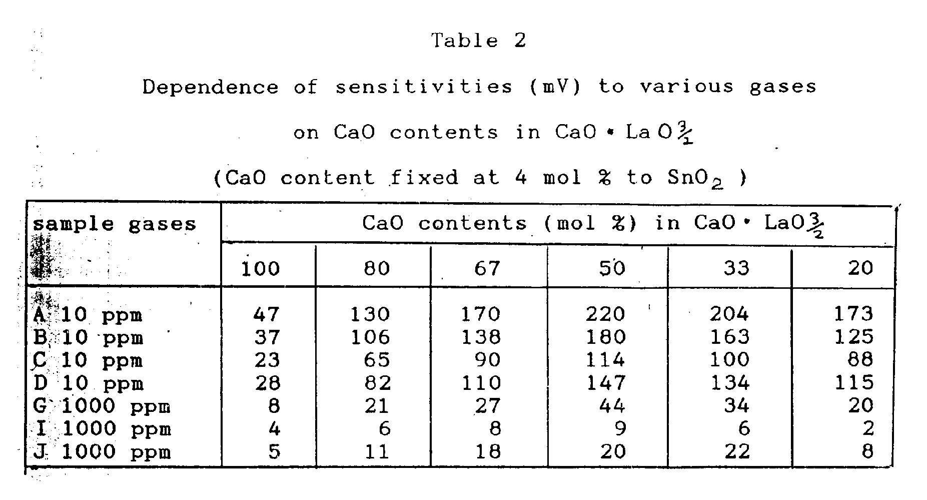

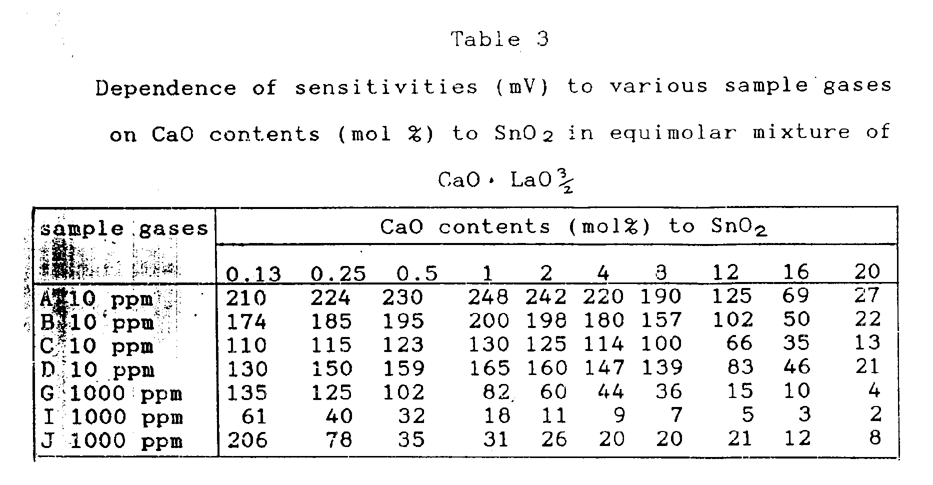

## Claims

1. A smell sensing element, comprising:
a semiconductor portion (6b, 6f) of SnO₂ and first and second components carried by said SnO₂ in a mixed state,
said first component being at least one oxide of an alkaline earth metal and being present in an amount of from 0.25 - 20 mol % based on said SnO₂, and
said second component being at least one oxide selected from Sc, Zr, Hf, Th, Al, Ga and metals of the lanthanide series, and being present in an amount of 0.25 - 20 mol % based on said SnO₂.

2. A method of manufacturing a sensing element according to Claim 1, wherein SnO₂ semiconductor portion is impregnated with an aqueous solution of salts of the metals of said first and second components, and said metal salts are then decomposed to their oxides by heating whereby said SnO₂ semiconductor portion carries said first and second components in a mixed state.

3. A smell sensing device comprising a smell sensing element (6) as claimed in Claim 1 or as manufactured according to Claim 2, and a readout means (9) for displaying the output of the sensing element.

4. A smell sensing device as claimed in Claim 3, further comprising a casing (1) having an inlet opening (2), an outlet opening (3) and passage (4) formed between said inlet and outlet openings, said smell sensing element (6) being exposed in said passage (4).

## Patentansprüche

1. Geruchaufspür-Element mit:
einem Halbleiterabschnitt (6b, 6f) aus SnO₂ und mit ersten und zweiten Komponenten, die in einem gemischten Zustand vom SnO₂ getragen werden,
wobei die erste Komponente mindestens ein Oxid eines Erdalkalimetalls und, bezogen auf das SnO₂, in einer Menge von 0,25 - 20 Mol-% vorhanden ist, und
wobei die zweite Komponente mindestens ein aus Sc, Zr, Hf, Th, Al, Ga und Metallen der Lanthanidenreihe ausgewähltes Oxid und, bezogen auf das SnO₂, in einer Menge von 0,25 bis 20 Mol-% vorhanden ist.

2. Verfahren zur Herstellung eines Aufspür-Elements nach Anspruch 1, bei welchem der SnO₂-Halbleiterabschnitt imprägniert wird mit einer wässrigen Lösung von Salzen der Metalle der ersten und zweiten Komponenten und anschließend diese Metallsalze mittels Erhitzen in ihre Oxide zersetzt werden, wodurch dieser SnO₂-Halbleiterabschnitt diese ersten und zweiten Komponenten in einem gemischten Zustand trägt.

3. Geruchaufspür-Vorrichtung mit einem Geruchaufspür-Element (6) nach Anspruch 1 oder einem gemäß Anspruch 2 hergestellten Geruchaufspür-Element (6) und mit einer Auslese-Einrichtung (9) zum Anzeigen des Ausgangs des Aufspür-Elementes.

4. Geruchaufspür-Vorrichtung nach Anspruch 3, des weiteren enthaltend ein Gehäuse (1) mit einer Einlaßöffnung (2), einer Auslaßlaßöffnung (3) und einem Durchlaß (4), der zwischen der Einlaß- und der Auslaßöffnung ausgebildet ist, wobei dieses Geruchaufspür-Element (6) in diesem Durchlaß (4) beaufschlagbar ist.

## Revendications

1. Elément sensible aux odeurs, ou élément détecteur d'odeurs, cet élément comprenant :
une partie semi-conductrice (6b, 6f) en SnO₂ et des premier et second constituants portés à l'état de mélange par ledit SnO₂,
ledit premier constituant étant formé d'au moins un oxyde d'un métal alcalino-terreux et étant présent en une quantité de 0,25 à 20 moles pour-cent, sur la base dudit SnO₂, et
ledit second constituant étant formé d'au moins un oxyde (d'un élément chimique) choisi parmi Sc, Zr, Hf, Th, Al, Ga et des métaux de la série des lanthanides, et étant présent en une quantité de 0,25 à 20 moles pour-cent, sur la base dudit SnO₂.

2. Procédé de fabrication d'un élément détecteur selon la revendication 1, dans lequel la partie semi-conductrice en SnO₂ est imprégnée d'une solution aqueuse de sels des métaux desdits premier et second constituants, et lesdits sels de métaux sont ensuite décomposés, par chauffage, en leurs oxydes, de sorte que ladite partie semi-conductrice en SnO₂ porte lesdits premier et second constituants à l'état de mélange.

3. Dispositif détecteur d'odeurs, comprenant un élément (6) détecteur d'odeurs ou sensible aux odeurs, selon la revendication 1, ou tel que fabriqué selon la revendication 2, et un moyen (9) de lecture pour afficher la sortie de l'élément détecteur.

4. Dispositif détecteur d'odeurs, tel que revendiqué à la revendication 3, ce dispositif comprenant en outre un boîtier (1) comportant une ouverture d'entrée (2), une ouverture de sortie (3) et un passage (4) formé entre lesdites ouvertures d'entrée et de sortie, ledit élément (6) de détection d'odeurs étant exposé dans ledit passage (4).
